# EUROPEAN PATENT SPECIFICATION

(11) **EP 3 569 459 B1**
(45) Date of publication and mention of the grant of the patent: **19.07.2023**
(21) Application number: 18738688.3
(22) Date of filing: 10.01.2018
(51) Int. Cl.: B60T 17/00, B60T 13/38, B60T 13/26, B60T 17/08

(54) **PNEUMATIC BRAKE SYSTEM**
DRUCKLUFTBREMSENSYSTEM
SYSTÈME DE FREIN PNEUMATIQUE

(30) Priority: 10.01.2017 JP 2017001644
(43) Date of publication of application: 20.11.2019
(73) Proprietor: Nabtesco Automotive Corporation, Tokyo 102-0093 (JP)
(72) Inventor: HASEBE, Hiroki, Tokyo 102-0093 (JP)
(74) Representative: Grünecker Patent- und Rechtsanwälte PartG mbB
(86) International application number: PCT/JP2018/000384
(87) International publication number: WO 2018/131621

(56) References cited:
- WO-A1-2016/006695
- JP-A- 2009 113 803
- JP-A- 2012 256 167
- US-A1- 2007 262 637
- US-A1- 2010 187 902

## Description

### TECHNICAL FIELD

The present invention relates to a pneumatic brake system that activates a parking brake.

### BACKGROUND ART

In recent years, research and development of systems to perform platooning, in which vehicles travel in a platoon, have been in progress. The vehicles in a platoon travel so as to maintain a predetermined vehicle-to-vehicle distance while communicating with each other. In the field of logistics in particular, a system has been proposed in which platooning is performed by a lead vehicle driven by a driver and unmanned following vehicles or vehicles with observers. The following vehicles are controlled following the behavior of the lead vehicle. For example, in the brake control, when the lead vehicle activates the brake, the following vehicles follow the action of the lead vehicle and activate the brakes. Cargo vehicles such as trucks used in this field are equipped with pneumatic brake systems that activate brakes using compressed air.

For example, Patent Document 1 discloses a following drive control device that performs following drive control while maintaining the vehicle-to-vehicle distance with the lead vehicle. The vehicles are equipped with an electric parking brake actuator that activates the parking brake. The controller of the following drive control device controls the electric parking brake actuator via a brake control device. During performance of the following drive control, when the driver manipulates the brake switch or the like, the controller enters a control cancellation state, in which the following drive control is suspended. If an anomaly occurs in the following drive control device in the control cancellation state, the device enters to a stopped state. In the device stopped state, braking by the service brake is switched to braking by the electric parking brake when the vehicle is stopped.

Document US 2010/187 902 A1 relates to a parking brake module for a pressure medium-operated brake system of a vehicle having a parking brake function by means of at least one spring brake cylinder. Said parking brake module comprises a first valve device which increases the amount of pressure medium and is fitted with an inlet that can be connected to a pressure medium reservoir, an outlet that can be connected to at least one spring-loaded part of a spring brake cylinder, and a control input that is connected to a control line. The parking brake module further comprises a second valve device encompassing at least one first connection which is used as a trailer control valve connection and can be connected to a trailer control valve in order to control a trailer brake.

Document US 2007/262 637 A1 relates to a vehicle air brake system presented with an improved service work brake arrangement. The arrangement provides a service work brake function or both a service work brake function and a parking brake function for the vehicle. The arrangement provides an improved service work brake arrangement disposed within a housing for reducing the number of components and plumbing required to achieve this functionality versus prior known systems. The arrangement utilizes a pneumatic latching valve to deliver pressurized air for applying a vehicle's service brakes. The pneumatic latching valve opens upon receiving a pneumatic control signal from an electronically controlled valve and closes upon receiving a pneumatic control signal from another source. In addition, a controller and control logic may be provided for controlling the arrangement.

Document WO 2016/006 695 A1 relates to a parking brake system which electrically controls the parking brakes of a vehicle. The parking brake system is provided with a parking brake provided to each vehicle wheel; an air dryer ECU that electrically controls the parking brakes; and a drive unit that is provided to each axle of the vehicle wheels and that operates the parking brake by means of compressed air depending on an electrical signal from the air dryer ECU.

### PRIOR ART DOCUMENT

### Patent Document

Patent Document 1: Japanese Laid-Open Patent Publication No. 2007-1327

### SUMMARY OF THE INVENTION

### Problems that the Invention is to Solve

The following vehicles in a platoon are controlled through unmanned driving or automatic driving in which an observer monitors the behavior of the vehicles. Thus, the driver does not operate the following vehicles when an anomaly occurs in the pneumatic brake systems, such as the brake control devices. In the following drive control device described above, the control cancellation state is not entered unless manipulation by the driver operation is performed during the following drive. Thus, even if an anomaly occurs in the pneumatic brake system, it is not possible to forcibly stop the vehicle by shifting to the device stopped state. Therefore, there has been a demand for improvement of the safety of the pneumatic brake system so as to deal with anomalies of pneumatic brake systems of vehicles that perform platooning.

These drawbacks are present not only in vehicles that travel in platoons, but also found in vehicles that perform automatic driving.

Accordingly, it is an objective of the present invention to provide a pneumatic brake system that is capable of automatically activating the parking brake in an emergency.

### Means for Solving the Problems

To achieve the foregoing objective, a pneumatic brake system mounted on a vehicle is provided. The pneumatic brake system discharges air from a brake mechanism provided on a wheel to activate a parking brake and supplies air to the brake mechanism to release the parking brake. The pneumatic brake system includes a parking brake module and a brake control device.

The parking brake module releases the parking brake when in an energized state and activates the parking brake when in a de-energized state. The brake control device puts the parking control module in the energized state and the de-energized state.

With the above-described configuration, when an anomaly occurs in the brake control device, the parking brake module is not energized so that the parking brake is forcibly activated.

Therefore, the parking brake is automatically activated in an emergency, even when operation by the driver cannot be expected, for example, during platooning.

The parking brake module further includes a bypass passage that has a first end, which is connected to a section of the signal passage on an upstream side of a control valve, and a second end, which is connected to a section of a signal passage on a downstream side of the control valve, and a release valve that is connected to the bypass passage and switchable between a first position, at which the release valve closes the bypass passage, and a second position, at which the release valve opens the bypass passage, wherein the control valve is controlled by the brake control device, and the signal passage supplies air as a pneumatic signal from an air storage portion to a relay valve that is controlled by air pressure.

With the above-described configuration, when the parking brake is forcibly activated, the pneumatic signal can be supplied to the relay valve, for example, through the bypass passage through manipulation of the release valve by the operator. This cancels the forcible braking, allowing the vehicle to travel again.

In one embodiment, the parking brake module of the above-described pneumatic brake system may include a supply passage that connects the air storage portion and the brake mechanism to each other and has a larger cross-sectional flow area than the signal passage. The control valve is switchable between a connection position, at which the control valve is energized by the brake control device to open the signal passage, and a disconnection position, at which the control valve is de-energized to close the signal passage. When receiving the pneumatic signal, the relay valve opens the supply passage to supply air to the brake mechanism, thereby releasing the parking brake. When receiving no pneumatic signal, the relay valve closes the supply passage to discharge air from the brake mechanism, thereby activating the parking brake.

With the above-described configuration, the control valve, which is an electromagnetic valve, simply needs to have an output capability of supplying pneumatic signals. This prevents the size of the control valve from being enlarged and reduces the power consumption of the control valve. In addition, when receiving a pneumatic signal, the relay valve connects the air storage portion and a passage having a larger cross-sectional flow area than that of the signal passage, thereby quickly supplying a large amount of air to the brake mechanism. This improves the response when the parking brake is released. Furthermore, since the control valve delivers the pneumatic signal when in an energized state and stops the supply of the pneumatic signal when in a de-energized state, the supply of the pneumatic signal is stopped when an anomaly occurs in the brake control device. As a result, the supply of air to the brake mechanism by the relay valve is stopped, so that the parking brake is forcibly activated.

In one embodiment, in the above-described pneumatic brake system, the vehicle may be provided with a first parking brake module, which is controlled by a first brake control device that is different from the brake control device. When the first parking brake module does not operate, the parking brake module is controlled by a second brake control device, which is the brake control device, to operate as a second parking brake module.

With the above-described configuration, when the first parking brake module does not operate, the parking brake module operates as a backup second parking brake module. This improves the redundancy of the pneumatic brake system.

In one embodiment, in the above-described pneumatic brake system, the vehicle may be a vehicle that performs platooning with other vehicles. The brake control device controls the parking brake module according to a stop instruction from a platooning drive control device mounted on the vehicle. When an anomaly occurs in the platooning drive control device, the brake control device de-energizes the parking brake module, thereby activating the parking brake.

With the above-described configuration, in a vehicle performing platooning, the parking brake module is de-energized when an anomaly occurs in the platooning drive control device. Thus, when an anomaly occurs in the platooning drive control device, the parking brake can be activated.

### Effects of the Invention

The present invention allows the parking brake to be automatically activated in an emergency.

### BRIEF DESCRIPTION OF THE DRAWINGS

Fig. 1 is a schematic diagram of a pneumatic brake system according to an embodiment, illustrating a platoon organized by vehicles equipped with the pneumatic brake system.
Fig. 2 is a pneumatic circuit diagram partially illustrating in detail the pneumatic brake system of the embodiment, showing a state in which the parking brake is activated.
Fig. 3 is a pneumatic circuit diagram partially illustrating in detail the pneumatic brake system of the embodiment, showing a state in which the parking brake is released.
Fig. 4 is a pneumatic circuit diagram partially illustrating in detail the pneumatic brake system of the embodiment, showing a state in which the vehicle is allowed to travel again after the parking brake is forcibly activated.
Fig. 5 is a schematic pneumatic circuit diagram partially illustrating in detail a pneumatic brake system according to a modification.
Fig. 6 is a schematic diagram of a release valve according to a modification constituting a part of a pneumatic brake system.
Fig. 7A is a schematic diagram of a release valve according to a modification constituting a part of a pneumatic brake system, showing a state in which the first passage is open.
Fig. 7B is a schematic diagram of the modification of Fig. 7A, showing a state in which the forcible braking is cancelled.
Fig. 8A is a schematic diagram of a release valve according to a modification constituting a part of a pneumatic brake system, showing a state in which the first passage is open.
Fig. 8B is a schematic diagram of the modification of Fig. 8A, showing a state in which the forcible braking is cancelled.
Fig. 9A is a schematic diagram of a release valve according to a modification constituting a part of a pneumatic brake system, showing a state in which the first passage is open.
Fig. 9B is a schematic diagram of the modification of Fig. 9A, showing a state in which the forcible braking is cancelled.

### MODES FOR CARRYING OUT THE INVENTION

An embodiment will now be described in which a pneumatic brake system is employed in vehicles that perform platooning.

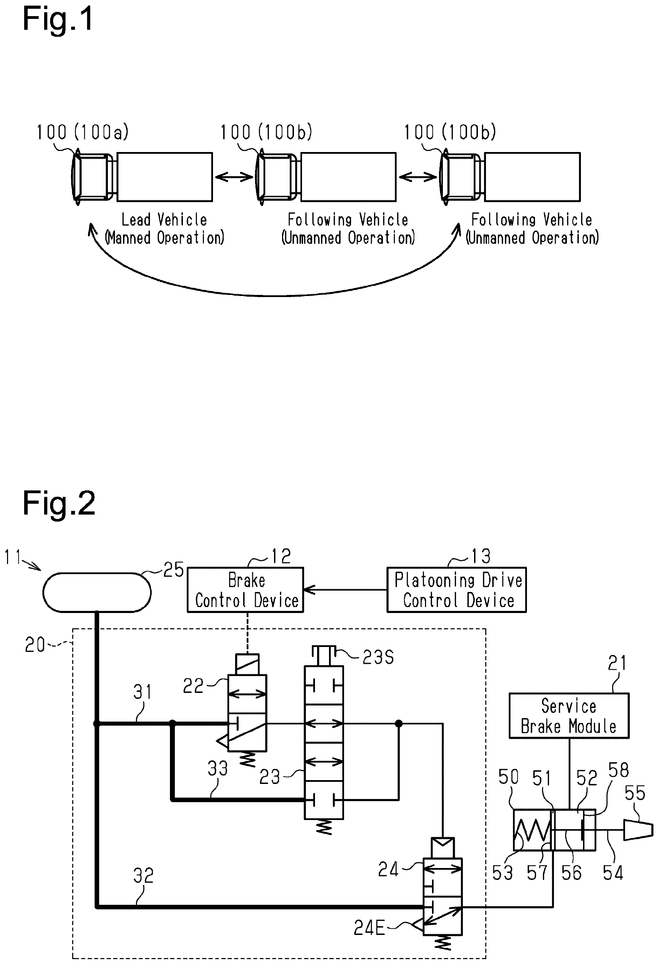

With reference to Fig. 1, platooning will be described. Vehicles 100 that organize a platoon are a cargo vehicle. Specifically, the vehicles 100 are trucks having a loading platform. The platoon is composed of a lead vehicle 100a and following vehicles 100b, which travel behind the lead vehicle 100a. The lead vehicle 100a is operated by a driver (manned operation), and the following vehicles 100b are driven automatically without drivers (unmanned operation) or driven automatically with observers on board. The observer only monitors the behavior of the vehicle on which the observer rides and basically does not drive. Each of the vehicles 100, which organize the platoon, transmits information such as speed to the vehicle 100 behind, for example, every few milliseconds to several tens of milliseconds. Each vehicle 100 accelerates or decelerates such that the vehicle-to-vehicle distance with the preceding vehicle 100 becomes a predetermined distance based on the received information such as the speed. Also, each following vehicle 100b may be driven by the driver as needed, for example, when traveling on a road other than predetermined sections where platooning is performed. In Fig. 1, the platoon is organized by three vehicles 100, but the number of vehicles that organize a platoon may be more than three.

The vehicles 100 are each equipped with a pneumatic brake system that operates the brake using compressed air. The pneumatic brake system operates the service brake (regular brake, foot brake), which varies the braking force by air pressure, and the parking brake, which applies a predetermined braking force to the wheels by the urging force of springs.

With reference to Fig. 2, the configuration of a pneumatic brake system 11 will be described. The pneumatic brake system 11 has a brake control device 12. The brake control device 12 includes a computation section, a volatile storage section as a computation region, and a non-volatile storage section. The computation section controls the brake in accordance with programs stored in the non-volatile storage section. The brake control device 12 is connected to a platooning drive control device 13, which functions as a drive control device, via the in-vehicle network (not shown). The platooning drive control device 13 includes a computation section, a volatile storage section as a computation region, and a non-volatile storage section. The computation section executes various types of computations for platooning in accordance with programs stored in the non-volatile storage section and outputs instructions to control devices. The platooning drive control device 13 also performs road-to-vehicle communication, vehicle-to-vehicle communication, and the like via a communication section (not shown). The brake control device 12 activates the brake when receiving a deceleration instruction from the platooning drive control device 13.

The pneumatic brake system 11 includes brake chambers 50 as brake mechanisms provided for the respective wheels. The brake chamber 50 includes a first air storage segment 51 for the parking brake and a second air storage segment 52 for the service brake. A parking brake module 20 is connected to the first air storage segment 51, and a service brake module 21 is connected to the second air storage segment 52.

The brake chamber 50 incorporates a spring 53. When air is supplied to the first air storage segment 51, a piston 57 that defines the first air storage segment 51 moves against the urging force of the spring 53 to increase the volume of the first air storage segment 51. When air is discharged from the first air storage segment 51, the piston 57 is moved by the urging force of the spring 53 to reduce the volume of the first air storage segment 51. The piston 57 is coupled to a pushing member 56. The pushing member 56 pushes a diaphragm 58, which defines the second air storage segment 52, when the piston 57 moves in the direction of increasing the volume of the second air storage segment 52. The diaphragm 58 is coupled to a push rod 54. The tip end of the push rod 54 is connected to a wedge 55, which is inserted into the brake lining (not shown) of the wheel. If air is discharged from the first air storage segment 51 when the second air storage segment 52 is not filled with air, the urging force of the spring 53 pushes the pushing member 56, and the pushing member 56 pushes the diaphragm 58 toward the brake lining. When the push rod 54 is pushed out by the movement of the diaphragm 58, the wedge 55 is inserted into the brake lining to spread the brake lining, thereby activating the parking brake. When the first air storage segment 51 is filled with air, the spring 53 is compressed, so that the piston 57 is moved in a direction away from the push rod 54. As a result, the pushing member 56 and the diaphragm 58 move in the same direction as the moving direction of the piston 57, so that the wedge 55 of the push rod 54 is pulled out of the brake lining, thereby releasing the parking brake. When the second air storage segment 52 is filled with air, the diaphragm 58 is moved toward the brake lining, so that the wedge 55 is inserted into the brake lining, thereby activating the service brake. As the amount of air supplied to the second air storage segment 52 increases, the braking force increases.

The parking brake module 20 includes a control valve 22 provided in a first passage 31, which functions as a signal passage. The first passage 31 is connected to a tank 25, which is an air storage source. The tank 25 stores air that has been compressed by a compressor (not shown). The control valve 22 is an electromagnetic valve controlled by the brake control device 12. The control valve 22 is configured to be switched between a discharge position and a connection position. Specifically, when in a de-energized state, the control valve 22 is at the discharge position to close the first passage 31, thereby discharging air on the downstream side of the control valve 22. When in an energized state, the control valve 22 is at the connection position to open the first passage 31.

The first passage 31 is provided with a bypass passage 33 that bypasses the control valve 22. The bypass passage 33 has a first end, which is connected to a section of the first passage 31 on the upstream side of the control valve 22, and a second end, which is connected to a section of the first passage 31 on the downstream side of the control valve 22.

The bypass passage 33 is provided with a release valve 23. The release valve 23 has a manipulation portion 23S manually operated by the operator. The release valve 23 is connected to the first passage 31 and the bypass passage 33. The release valve 23 is configured to be switched between a first position and a second position. When at the first position, the release valve 23 closes the bypass passage 33 and opens the first passage 31. When at the second position, the release valve 23 opens the bypass passage 33 and closes the first passage 31. The release valve 23 is maintained at the first position when the manipulation portion 23S is not manipulated. The release valve 23 is shifted to the second position when the manipulation portion 23S is manipulated, for example, when the manipulation portion 23S is pushed.

The parking brake module 20 includes a relay valve 24. The relay valve 24 is provided in a second passage 32, which is a supply passage connecting the tank 25 to the first air storage segment 51 of the brake chamber 50. The second passage 32 has a larger cross-sectional flow area than the first passage 31 and the bypass passage 33 and is capable of supplying a large volume of air. The relay valve 24 has a discharge port 24E capable of discharging air from the first air storage segment 51. Also, the relay valve 24 is a pilot valve controlled by air of a predetermined pressure delivered as a pneumatic signal, and the input port for the pneumatic signal is connected to the first passage 31. The relay valve 24 is configured to be switched between a discharge position and a connection position. At the discharge position, the relay valve 24 connects the first air storage segment 51 and the discharge port 24E to each other. At the connection position, the relay valve 24 opens the second passage 32 to connect the tank 25 and the brake chamber 50 to each other. The relay valve 24 has a spring that applies an urging force to move the relay valve 24 to the discharge position. When receiving no pneumatic signal, the relay valve 24 is at the discharge position. When receiving a pneumatic signal, the relay valve 24 is at the connection position.

Next, with reference to Figs. 2 to 4, an operation of the parking brake module 20 will be described. The states of the parking brake module 20 include an activated state, a deactivated state, a forcible braking state, and a forcible braking cancellation state.

With reference to Fig. 2, the activated state of the parking brake module 20 will be described. The parking brake is in the activated state when, for example, the ignition switch of the vehicle 100 is off. For example, when there is an anomaly in neither the platooning drive control device 13 nor the brake control device 12, the platooning drive control device 13 outputs a stop instruction, and the brake control device 12 puts the control valve 22 in a de-energized state based on the stop instruction. Accordingly, the control valve 22 is shifted to the discharge position. The release valve 23 is maintained at the first position to open the first passage 31 and close the bypass passage 33. Accordingly, no pneumatic signal is supplied to the relay valve 24, so that the relay valve 24 is in the discharge position. As a result, air is discharged from the first air storage segment 51 of the brake chamber 50 to activate the parking brake. The parking brake module 20 and the service brake module 21 are connected to each other by a passage (not shown) such that the service brake is not activated when the parking brake is in the activated state.

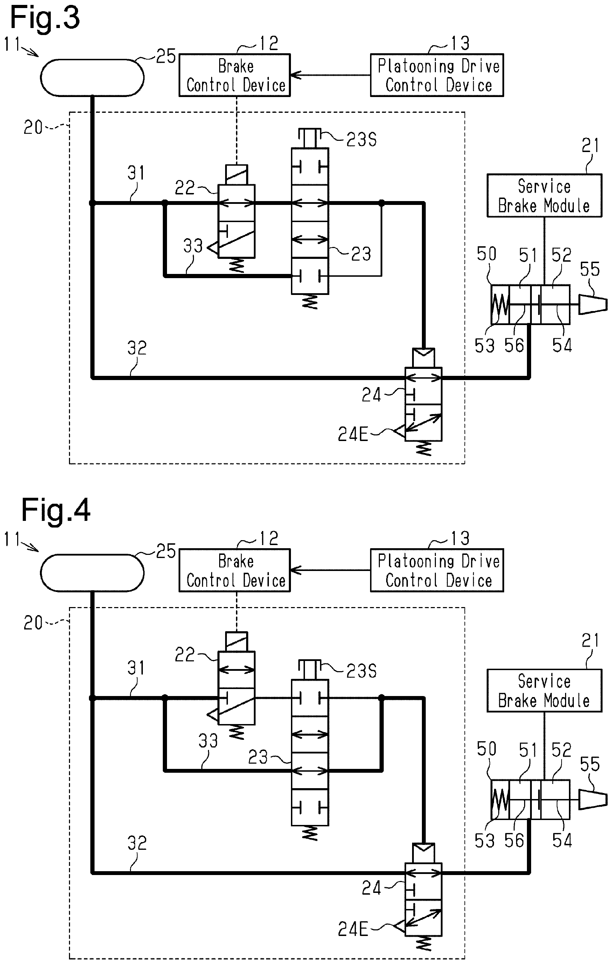

With reference to Fig. 3, the deactivated state of the parking brake module 20 will be described. In the deactivated state of the parking brake, the parking brake is released and the vehicle 100 is allowed to travel. The service brake can also be activated. The deactivated state of the parking brake is selected when the ignition switch is on and there is no anomaly in the brake control device 12 and the like. In the deactivated state of the parking brake, the control valve 22 is energized by the brake control device 12 so as to be in the connection position. The release valve 23 is maintained in the first position. This supplies air from the tank 25 to the first passage 31, so that a pneumatic signal is supplied to the relay valve 24. When receiving the pneumatic signal, the relay valve 24 is in the connection position. As a result, the air stored in the tank 25 is supplied to the first air storage segment 51 of the brake chamber 50 through the relay valve 24 to release the parking brake. At this time, the amount of air delivered to the first air storage segment 51 via the relay valve 24 is greater than the amount of air delivered from the control valve 22 as the pneumatic signal. It is thus possible to improve the response time from when the control valve 22 is energized to when the parking brake is released.

In the deactivated state of the parking brake, the forcible braking state occurs in an emergency that requires stopping of the vehicle 100, such as when an anomaly occurs in at least one of the brake control device 12 and the platooning drive control device 13 or in another control device. The forcible braking state is a state in which the parking brake is forcibly activated, and the parking brake module 20 itself operates in the same manner as in the activated state of the parking brake (see Fig. 2). If an anomaly occurs in the platooning drive control device 13, the brake control device 12 shifts the parking brake module 20 to the forcible braking state based on information delivered from a mediation device connected to the in-vehicle network or from the platooning drive control device 13. If an anomaly occurs in the brake control device 12, the control valve 22 is de-energized and directly shifted to the forcible braking state. The control valve 22 in the de-energized state is at the discharge position and discharges the air on the downstream side of the control valve 22. Since the relay valve 24 is at the discharge position, air is discharged from the first air storage segment 51 of the brake chamber 50 to activate the parking brake.

Next, referring to Fig. 4, the forcible braking cancellation state will be described. The forcible braking cancellation state is a mode for releasing the parking brake after the forcible braking is activated, thereby allowing the vehicle 100 to travel while the service brake is activated by a brake operation by the driver. The driver can move the vehicle 100 to a nearby maintenance site or the like by causing the vehicle 100 to travel again at a predetermined speed after the forcible braking is activated.

In the forcible braking state, the control valve 22 is at the discharge position. For example, the operator such as the driver or observer of the lead vehicle 100a manipulates the manipulation portion 23S of the release valve 23. This shifts the release valve 23 to the second position, opening the bypass passage 33. This delivers the air supplied from the tank 25 to a signal input port of the relay valve 24 via the bypass passage 33. When receiving a pneumatic signal, the relay valve 24 is put in the connection position, opening the second passage 32. As a result, the air in the tank 25 is supplied to the first air storage segment 51 via the second passage 32 to release the parking brake. Thus, when the parking brake is released, the driver drives the vehicle 100 while operating the brake pedal and the like.

When the parking brake is activated in the forcible braking cancellation state, the release valve 23 is returned from the second position to the first position. At this time, since the control valve 22 is at the discharge position, the air on the downstream side of the control valve 22 is discharged, and the relay valve 24 is shifted to the discharge position. This activates the parking brake.

The above-described embodiment achieves the following advantages.
(1) When an anomaly occurs in the brake control device 12, the parking brake module 20 is not energized so that the parking brake is forcibly activated. Therefore, the parking brake can be automatically activated in an emergency even in platooning in which operation is not performed by the driver.
(2) The control valve 22, which is an electromagnetic valve, simply needs to have an output capability of supplying pneumatic signals. This prevents the size of the control valve 22 from being enlarged and reduces the power consumption of the control valve 22. In addition, when receiving a pneumatic signal, the relay valve 24 connects the tank 25 to the second passage 32, which has a larger cross-sectional flow area than the first passage 31, thereby quickly supplying a large amount of air to the brake chamber 50. This improves the response when the parking brake is released. Furthermore, since the control valve 22 delivers the pneumatic signal when in an energized state and stops the supply of the pneumatic signal when in a de-energized state, the supply of the pneumatic signal is stopped when an anomaly occurs in the brake control device 12. This shifts the relay valve 24 to the discharge position, so that the supply of air to the brake chamber 50 is stopped. Accordingly, the parking brake is forcibly activated.
(3) When the parking brake is forcibly activated, the pneumatic signal can be supplied to the relay valve 24, for example, through the bypass passage 33 through manipulation of the release valve 23 by the operator. This cancels the forcible braking, allowing the vehicle 100 to travel again.
(4) In the platooning vehicle 100, the brake control device 12 de-energizes the parking brake module 20 when an anomaly occurs in the platooning drive control device 13. Thus, when an anomaly occurs in the platooning drive control device 13, the parking brake can be activated.

The above-described embodiment may be modified as follows.

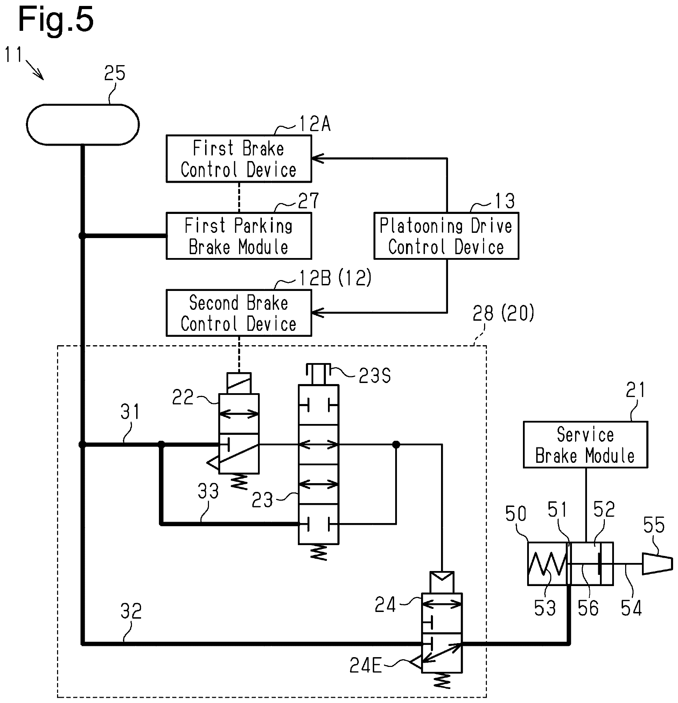

As shown in Fig. 5, the pneumatic brake system 11 may be provided with a first brake control device 12A and a second brake control device 12B, which receive a deceleration instruction from the platooning drive control device 13. The second brake control device 12B activates and releases the parking brake when the first brake control device 12A does not operate. An anomaly of the first brake control device 12A can be determined by the second brake control device 12B monitoring operation of the first brake control device 12A or by information transmitted from the platooning drive control device 13 or the mediation device monitoring the in-vehicle network. The first brake control device 12A controls a first parking brake module 27, and the second brake control device 12B controls a second parking brake module 28. That is, the parking brake module is duplexed. The second parking brake module 28 corresponds to the parking brake module 20 in the above-illustrated embodiment. The second brake control device 12B controls the second parking brake module 28 when an anomaly occurs in the first brake control device 12A or the first parking brake module 27. When an anomaly occurs in the platooning drive control device 13 and the second brake control device 12B, the control valve 22 of the second parking brake module 28 is automatically de-energized, so that the parking brake is activated.

With this configuration, the second parking brake module 28 operates as a backup module when the first parking brake module 27 does not operate, which increases the redundancy of the pneumatic brake system 11. Moreover, with this configuration, when an anomaly occurs in the second brake control device 12B, the first brake control device 12A controls the first parking brake module 27 if there is no anomaly in the first brake control device 12A, thereby stopping or driving the vehicle 100.

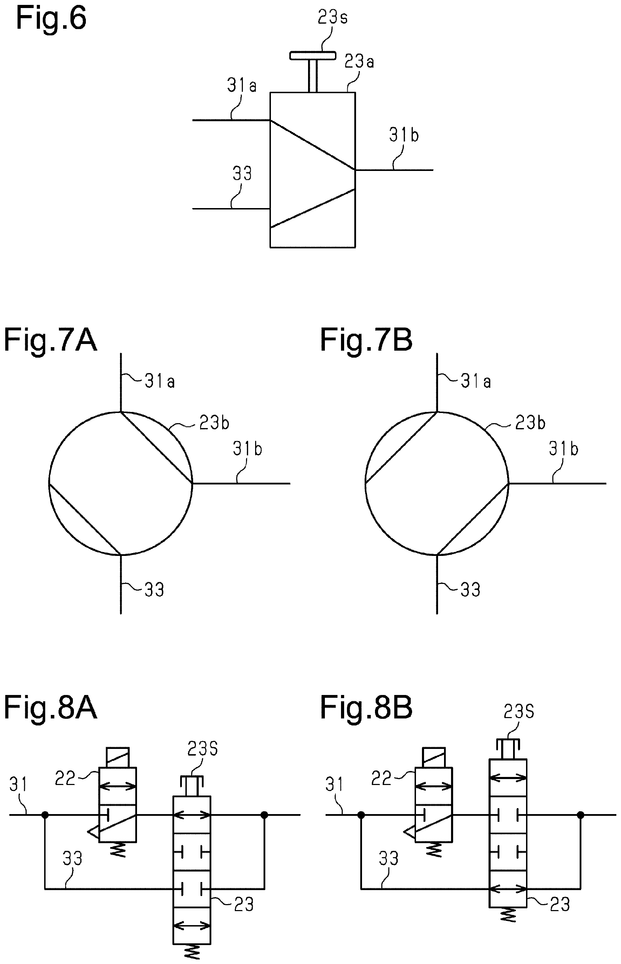

A release valve 23a shown in Fig. 6 may be employed. The release valve 23a is configured to be connected to flow paths 31a, 31b of the first passage 31 and the bypass passage 33. The flow path 31a is on the upstream side and connected to the control valve 22, and the flow path 31b is on the downstream side and connected to the relay valve 24. When shifting to the forcible braking releasing mode, the bypass passage 33 may be connected to the flow path 31b by pulling the manipulation portion 23S. The connection position of the flow path 31a to the release valve 23a and the connection position of the bypass passage 33 to the release valve 23a shown in Fig. 6 may be reversed. In this case, if the flow path 31a and the flow path 31b are configured to be connected to each other when the parking brake is activated, the bypass passage 33 can be connected to the flow path 31b by pressing the manipulation portion 23S.

A release valve 23b shown in Figs. 7A and 7B may be employed. The release valve 23b is rotated to switch connection between the flow path 31a on the upstream side in the first passage 31, the flow path 31b on the downstream side in the first passage 31, and the bypass passage 33. For example, as shown in Fig. 7A, the release valve 23b connects the flow path 31a to the flow path 31b. As shown in Fig. 7B, when the release valve 23b is rotated by a predetermined angle from the state of Fig. 7A, the flow path 31b is connected to the bypass passage 33.

In the above-illustrated embodiment, the release valve 23 is configured to be shifted to the second position when the manipulation portion 23S is pushed. Alternatively, as shown in Figs. 8A and 8B, the release valve 23 may be configured to be shifted to the second position when the manipulation portion 23S is pulled. With this configuration, for example, the release valve 23 opens the first passage 31 and closes the bypass passage 33 when activating or releasing the parking brake as shown in Fig. 8A. Also, the release valve 23 closes the first passage 31 and opens the bypass passage 33 when releasing the forcible braking as shown in Fig. 8B. Even in this case, the parking brake can be automatically activated in an emergency. Also, the parking brake can be released after the parking brake is automatically operated.

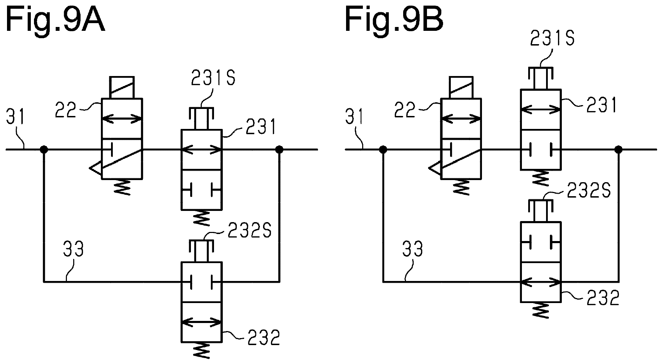

In the above-illustrated embodiment, the single release valve 23 is connected to the first passage 31 and the bypass passage 33. Alternatively, the first passage 31 and the bypass passage 33 may be independently provided with a release valve. For example, as shown in Fig. 9A, a first release valve 231 may be connected to the first passage 31, and a second release valve 232 may be connected to the bypass passage 33. The first and second release valves 231, 232 respectively have manipulation portion 231S, 232S manually operated by the operator. When the parking brake is activated or released, the first release valve 231 opens the first passage 31 and the second release valve 232 closes the bypass passage 33. Also, as shown in Fig. 9B, when cancelling the forcible braking, the manipulation portions 231S, 232S are pulled, so that the first release valve 231 closes the first passage 31 and the second release valve 232 opens the bypass passage 33.

In the above-illustrated embodiment, the pneumatic brake system 11 is configured to include the bypass passage 33 and the release valve 23, which has the manipulation portion 23S. Alternatively, the release valve 23 may be an electromagnetic valve that closes and opens the bypass passage 33 or may be a pilot valve that opens the bypass passage 33 when receiving a pneumatic signal or when receiving no pneumatic signal. In short, any configuration may be employed as long as the bypass passage 33 is switched from the closed state to the open state when the first passage 31 is closed by the control valve 22 in an emergency.

In the above-illustrated embodiment, the pneumatic brake system 11 is configured to include the control valve 22 and the relay valve 24. The control valve 22 is at the connection position when energized and at the disconnection position when not energized. The relay valve 24 is at the connection position when receiving a pneumatic signal and at the disconnection position when receiving no pneumatic signal. The control valve 22 and the relay valve 24 are two-position valves. Alternatively, three-position valves including a neutral position or linear control valves driven by a motor to supply air in multiple stages may be used.

In the above-illustrated embodiment, the vehicles 100 equipped with the pneumatic brake system 11 are vehicles that perform platooning. Instead of this, the vehicle 100 may be a vehicle that follows another vehicle traveling ahead, or may be a vehicle that travels independently. A vehicle that performs following drive control is equipped with a following drive control device as a drive control device, and a vehicle that performs automatic traveling independently is equipped with an automatic drive control device as a drive control device. Even in this case, the parking brake can be forcibly activated when an anomaly occurs in the following drive control device, the automatic cruise control device, or the brake control device 12.

### DESCRIPTION OF THE REFERENCE NUMERALS

11...Pneumatic Brake System, 12...Brake Control Device, 12A...First Brake Control Device, 12B...Second Brake Control Device, 13...Platooning Drive Control Device, as Drive Control Device, 20...Parking Brake Module, 22...Control Valve, 23...Release Valve, 24...Relay Valve, 25...Tank as Air Storage Source, 27...First Parking Brake Module, 28...Second Parking Brake Module, 31...First Passage as Signal Passage, 32...Second Passage as Supply Passage, 33...Bypass Passage, 50...Brake Mechanism, 100...Vehicle.

## Claims

1. A pneumatic brake system (11) mounted on a vehicle (100), the pneumatic brake system discharging air from a brake mechanism (50) provided on a wheel to activate a parking brake and supplying air to the brake mechanism (50) to release the parking brake, and the pneumatic brake system comprising:
a parking brake module (20) that releases the parking brake when in an energized state and activates the parking brake when in a de-energized state; and
a brake control device (12) that puts the parking control module in the energized state and the de-energized state,
**characterized in that** the parking brake module (20) includes
a bypass passage (33) that has a first end, which is connected to a section of the signal passage (31) on an upstream side of a control valve (22), and a second end, which is connected to a section of a signal passage (31) on a downstream side of the control valve (22), and
a release valve (23) that is connected to the bypass passage (33) and switchable between a first position, at which the release valve (23) closes the bypass passage (33), and a second position, at which the release valve (23) opens the bypass passage (33),
wherein the control valve (22) is controlled by the brake control device (12), and the signal passage (31) supplies air as a pneumatic signal from an air storage portion to a relay valve (24) that is controlled by air pressure.

2. The pneumatic brake system according to claim 1, wherein
the parking brake module (20) further includes
a supply passage (32) that connects the air storage portion and the brake mechanism (50) to each other and has a larger cross-sectional flow area than the signal passage (31), wherein
the control valve (22) is switchable between a connection position, at which the control valve (22) is energized by the brake control device (12) to open the signal passage (31), and a disconnection position, at which the control valve (22) is de-energized to close the signal passage (31),
when receiving the pneumatic signal, the relay valve (24) opens the supply passage (32) to supply air to the brake mechanism (50), thereby releasing the parking brake, and
when receiving no pneumatic signal, the relay valve (24) closes the supply passage (32) to discharge air from the brake mechanism (50), thereby activating the parking brake.

3. The pneumatic brake system according to claims 1 or 2, wherein
the vehicle (100) is provided with a first parking brake module (27), which is controlled by a first brake control device (12A) that is different from the brake control device, and
when the first parking brake module (27) does not operate, the parking brake module (20) is controlled by a second brake control device (12B), which is the brake control device, to operate as a second parking brake module (28).

4. The pneumatic brake system according to any one of claims 1 to 3, wherein
the vehicle (100) is a vehicle that performs platooning with other vehicles,
the brake control device (12) controls the parking brake module (20) according to a stop instruction from a platooning drive control device (13) mounted on the vehicle (100), and
when an anomaly occurs in the platooning drive control device (13), the brake control device (12) de-energizes the parking brake module (20), thereby activating the parking brake.

## Patentansprüche

1. Pneumatisches Bremssystem (11), das an einem Fahrzeug (100) angebracht ist, wobei das pneumatische Bremssystem Luft von einem an einem Rad vorgesehenen Bremsmechanismus (50) abgibt, um eine Feststellbremse zu aktivieren, und dem Bremsmechanismus (50) Luft zuführt, um die Feststellbremse zu lösen, und wobei das pneumatische Bremssystem umfasst:
ein Feststellbremsmodul (20), das die Feststellbremse löst, wenn es sich in einem angesteuerten Zustand befindet, und die Feststellbremse aktiviert, wenn es sich in einem abgesteuerten Zustand befindet; und
eine Bremssteuervorrichtung (12), die das Feststellbremsmodul in den angesteuerten Zustand und in den abgesteuerten Zustand versetzt,
**dadurch gekennzeichnet, dass** das Feststellbremsmodul (20) umfasst:
einen Umgehungskanal (33), der ein erstes Ende aufweist, das mit einem Abschnitt des Signalkanals (31) auf einer stromaufwärts gelegenen Seite eines Steuerventils (22) verbunden ist, und ein zweites Ende, das mit einem Abschnitt eines Signalkanals (31) auf einer stromabwärts gelegenen Seite des Steuerventils (22) verbunden ist, und
ein Freigabeventil (23), das mit dem Umgehungskanal (33) verbunden ist und zwischen einer ersten Stellung, in der das Freigabeventil (23) den Umgehungskanal (33) verschließt, und einer zweiten Stellung, in der das Freigabeventil (23) den Umgehungskanal (33) öffnet, umschaltbar ist,
wobei das Steuerventil (22) von der Bremssteuervorrichtung (12) gesteuert wird und der Signalkanal (31) Luft als pneumatisches Signal von einem Luftspeicherabschnitt einem luftdruckgesteuerten Relaisventil (24) zuführt.

2. Pneumatisches Bremssystem gemäß Anspruch 1, wobei das Feststellbremsmodul (20) ferner umfasst:
einen Versorgungskanal (32), der den Luftspeicherabschnitt und den Bremsmechanismus (50) miteinander verbindet und einen größeren Durchflussquerschnitt als der Signalkanal (31) aufweist, wobei
das Steuerventil (22) zwischen einer Verbindungsposition, in der das Steuerventil (22) von der Bremssteuervorrichtung (12) angesteuert wird, um den Signalkanal (31) zu öffnen, und einer Trennposition, in der das Steuerventil (22) abgesteuert wird, um den Signalkanal (31) zu schlie-ßen, umschaltbar ist,
bei Empfang des pneumatischen Signals, das Relaisventil (24) den Versorgungskanal (32) öffnet, um den Bremsmechanismus (50) mit Luft zu versorgen, wodurch die Feststellbremse gelöst wird, und
bei Nichtempfang des pneumatischen Signals, das Relaisventil (24) den Versorgungskanal (32) schließt, um Luft aus dem Bremsmechanismus (50) abzulassen, wodurch die Feststellbremse aktiviert wird.

3. Pneumatisches Bremssystem gemäß den Ansprüchen 1 oder 2, wobei
das Fahrzeug (100) mit einem ersten Feststellbremsmodul (27) ausgebildet ist, das von einer ersten Bremssteuervorrichtung (12A) gesteuert wird, die von der Bremssteuervorrichtung verschieden ist, und
bei Nichtbetrieb des ersten Feststellbremsmoduls (27), das Feststellbremsmodul (20) durch eine zweite Bremssteuervorrichtung (12B), die die Bremssteuervorrichtung ist, gesteuert wird, um als zweites Feststellbremsmodul (28) betrieben zu werden.

4. Pneumatisches Bremssystem gemäß einem der Ansprüche 1 bis 3, wobei
das Fahrzeug (100) ein Fahrzeug ist, das Platooning mit anderen Fahrzeugen durchführt,
die Bremssteuervorrichtung (12) das Feststellbremsmodul (20) gemäß einem Stoppbefehl von einer Platooning-Antriebssteuervorrichtung (13) steuert, die an dem Fahrzeug (100) befestigt ist, und
bei Auftreten einer Anomalie in der Platooning-Antriebssteuervorrichtung (13), die Bremssteuervorrichtung (12) das Feststellbremsmodul (20) absteuert, wodurch die Feststellbremse aktiviert wird.

## Revendications

1. Système de freinage pneumatique (11) monté sur un véhicule (100), le système de freinage pneumatique déchargeant l'air d'un mécanisme de freinage (50) prévu sur une roue pour activer un frein de stationnement et fournissant de l'air au mécanisme de freinage (50) pour relâcher le frein de stationnement, et le système de freinage pneumatique comprenant :
un module de frein de stationnement (20) qui desserre le frein de stationnement lorsqu'il est sous tension et active le frein de stationnement lorsqu'il est hors tension ; et
un dispositif de commande de frein (12) qui fait passer le module de commande de stationnement à l'état excité et à l'état désexcité,
**caractérisé par le fait que** le module de frein de stationnement (20) comprend
un passage de dérivation (33) dont la première extrémité est reliée à une section du passage de signal (31) du côté amont de la vanne de commande (22) et la deuxième extrémité est reliée à une section du passage de signal (31) du côté aval de la vanne de commande (22), et
une vanne de décharge (23) reliée au passage de dérivation (33) et commutable entre une première position, dans lequel la vanne de décharge (23) ferme le passage de dérivation (33), et une deuxième position, dans lequel la vanne de décharge (23) ouvre le passage de dérivation (33),
dans lequel la vanne de commande (22) est commandée par le dispositif de commande de frein (12), et le passage de signal (31) fournit de l'air sous forme de signal pneumatique à partir d'une partie de stockage d'air vers une vanne relais (24) qui est commandée par la pression de l'air.

2. Système de freinage pneumatique selon la revendication 1, dans lequel
le module de frein de stationnement (20) comprend en outre
un passage d'alimentation (32) qui relie la partie de stockage d'air et le mécanisme de freinage (50) l'un à l'autre et dont la section d'écoulement est plus grande que le passage de signal (31), dans lequel
la vanne de commande (22) peut être commutée entre une position de connexion, dans laquelle la vanne de commande (22) est sous tension par le dispositif de commande de frein (12) pour ouvrir le passage de signal (31), et une position de déconnexion, dans laquelle la vanne de commande (22) est mise hors tension pour fermer le passage de signal (31),
lorsqu'elle reçoit le signal pneumatique, la vanne relais (24) ouvre le passage d'alimentation (32) pour alimenter en air le mécanisme de freinage (50), ce qui a pour effet de desserrer le frein de stationnement, et
lorsqu'elle ne reçoit pas de signal pneumatique, la vanne relais (24) ferme le passage d'alimentation (32) pour décharger l'air du mécanisme de freinage (50), activant ainsi le frein de stationnement.

3. Système de freinage pneumatique selon les revendications 1 ou 2, dans lequel
le véhicule (100) est équipé d'un premier module de frein de stationnement (27), qui est commandé par un premier dispositif de commande de frein (12A) différent du dispositif de commande de frein, et
lorsque le premier module de frein de stationnement (27) ne fonctionne pas, le module de frein de stationnement (20) est commandé par un deuxième dispositif de commande de frein (12B), qui est le dispositif de commande de frein, pour fonctionner comme un deuxième module de frein de stationnement (28).

4. Système de freinage pneumatique selon l'une quelconque des revendications 1 à 3, dans lequel
le véhicule (100) est un véhicule qui effectue du regroupement en peloton avec d'autres véhicules,
le dispositif de commande de frein (12) commande le module de frein de stationnement (20) en fonction d'une instruction d'arrêt provenant d'un dispositif de commande de conduite en peloton (13) monté sur le véhicule (100), et
lorsqu'une anomalie se produit dans le dispositif de commande de conduite en peloton (13), le dispositif de commande de frein (12) met hors tension le module de frein de stationnement (20), activant ainsi le frein de stationnement.
